Europäisches Patentamt

European Patent Office

Office européen des brevets

(19)

(11) Veröffentlichungsnummer: **0 095 456**
**B1**

(12) **EUROPÄISCHE PATENTSCHRIFT**

(45) Veröffentlichungstag der Patentschrift:
03.09.86

(21) Anmeldenummer: 83890086.8

(22) Anmeldetag: 17.05.83

(51) Int. Cl.⁴: **F 41 F 23/12,** B 62 D 13/02,
B 60 D 1/14

(54) Verfahrbares Geschütz.

(30) Priorität: 21.05.82 AT 2023/82

(43) Veröffentlichungstag der Anmeldung:
30.11.83 Patentblatt 83/48

(45) Bekanntmachung des Hinweises auf die Patenterteilung:
03.09.86 Patentblatt 86/36

(84) Benannte Vertragsstaaten:
DE FR GB IT SE

(56) Entgegenhaltungen:
DE-B-1 294 852
DE-C-330 624
FR-A-1 267 376
FR-A-2 007 706
GB-A-226 848
US-A-2 201 660
US-A-2 549 835

(73) Patentinhaber: VOEST- ALPINE Aktiengesellschaft,
Friedrichstrasse 4, A-1011 Wien (AT)

(72) Erfinder: Zierler, Reinhard, Lunzerstrasse 18, A-4020
Linz (AT)

(74) Vertreter: Kretschmer, Adolf, Dipl.- Ing.,
Patentanwälte Dipl.Ing. A. Kretschmer Dr.
Thomas M. Haffner Schottengasse 3a, A-1014
Wien (AT)

EP 0 095 456 B1

**Beschreibung**

Die Erfindung bezieht sich auf ein mittels eines Zugfahrzeuges verfahrbares Geschütz mit einer Oberlafette und einer die Laufräder aufweisenden und als Drehschemel ausgebildeten Unterlafette, bei welchem an der Unterlafette wenigstens zwei Holme angelenkt sind, welche durch eine die Holme verbindende Einrichtung zu einem Viereck zusammengeschlossen sind und an wenigstens einem der beiden Holme eine Halterung für das Geschützrohr angeordnet ist. Es ist bereits bekannt, schwere Geschütze über eine zusätzliche Drehschemellagerung lenkbar zu machen.

Aus der DE-B 1 294 852 ist eine gattungsgemäße Einrichtung zu entnehmen. Die bekannte Einrichtung weist Holme auf, welche zum Zwecke der besseren Abstützung nach dem Abkoppeln des Zugfahrzeuges auseinandergespreizt werden können, um auf diese Weise ein Abstützdreieck zu bilden. Beim Fahrbetrieb werden die schwenkbaren Holme miteinander verbunden, wodurch ein starrer Rahmen mit ungelenkten Rädern gebildet wird.

Die GB-A 226 848 zeigt bereits lenkbare Achsen bei Straßenfahrzeugen, bei welchen mit einem Drehschemel eine exzentrisch angreifende Lenkstange verbunden ist. Auch die PR-A 1 267 376 zeigt ein Fahrzeug mit einem starren Rahmen, bei welchem zum Zwecke der Lenkung einer nachgezogenen Achse Lenkstangen vorgesehen sind, welche hier an einer schwenkbaren Scheibe angelenkt sind. Die schwenkbare Scheibe ist wiederum mit dem Zugfahrzeug gekoppelt. Die DE-C 330 624 zeigt und beschreibt eine Geschützlafette, welche einen starren Rahmen und über eine handradbetätigte Lenkvorrichtung schwenkbare Räder aufweist.

Die US-A 2 201 660 zeigt eine abwinkelbare Verbindung eines Fahrgestells mit einem Zugfahrzeug mit einander kreuzenden Lenkerstangen. Die FR-A 2 007 706 zeigt ein Straßenfahrzeug mit hydraulischer Lenkung nachgezogener Achsen, wobei am starren Rahmen hydraulische Zylinder-Kolben-Aggregate abgestützt werden, welche in Übereinstimmung mit der Drehbewegung einer gelenkten Achse mitbewegt werden.

Schließlich zeigt die US-A 2 549 835 ein fahrbares Geschütz, mit einer anhebbaren Achse und ausfahrbaren Abstützschuhen. Eine Lenkbarkeit der Räder des Fahrwerkes dieses Geschützes ist nicht vorgesehen. > > äufig werden schwere Geschütze am Zugfahrzeug direkt an einer Protzöse angehängt, welche eine direkte Verbindung zu den Holmen hat. Bei dieser Art von Anhängung des Geschützes besteht die Gefahr beim Befahren enger Kurvenradien darin, daß das Geschütz stark zum kleineren Kurvenradius läuft und die Kurve abzukürzen versucht. Dieser Nachteil ist geometrisch bedingt und wird ausschließlich vom Abstand des Zugfahrzeuges zum Radpaar oder den Räderpaaren des Geschützes bedingt.

Die Erfindung zielt nun darauf ab, ein Geschütz der eingangs genannten Art zu schaffen, welches in besonders einfacher Weise mit einem Zugfahrzeug so verbunden werden kann, daß die Laufräder des Geschützes bzw. der Unterlafette den Spuren des Zugfahrzeuges folgen.

Dieser Aufgabe wird erfindungsgemäß dadurch gelöst, daß die die Holme verbindende Einrichtung als Stützstange ausgebildet ist und die Holme zu einem Gelenkviereck, insbesondere einem Gelenkparallelogramm, verbindet, daß an einem der beiden Holme eine Protzstange starr befestigt ist, deren freies Ende etwa in der vertikalen Längsmittelebene des Gelenkvierecks liegt und die Anhängekupplung trägt, und daß eine mit dem Zugfahrzeug in Wirkverbindung setzbare Stellvorrichtung für die Lenkung der die Laufräder tragenden Unterlafette vorgesehen ist. Auf diese Weise können mit angehängtem Geschütz alle Straßen und Geländeformationen befahren werden, die vom Zugfahrzeug bewältigbar sind. Die Holme werden beim Befahren von Kurven in Längsrichtung zueinander verschoben bzw. im Falle eines Gelenkparallelogramms Parallel zueinander in entgegengesetzte Richtungen verschoben. Diese Parallelverschiebung der Holme bewirkt eine Verdrehung der Unterlafette, so daß die Räderstellung des Geschützes dem vom Zugfahrzeug eingeschlagenen Kurvenradius entspricht. Für diese Relativbewegung der Holme ist eine Stellvorrichtung vorgesehen, welche mit dem Zugfahrzeug in Wirkverbindung setzbar ist, welche in besonders einfacher Weise als in der Draufsicht die Protzstange kreuzende Lenkstange ausgebildet ist, deren eines Ende an dem dem die Protzstange tragenden Holm gegenüberliegenden Holm angelenkt ist und deren anderes Ende in einem seitlichen Abstand von der Anhängekupplung des Zugfahrzeuges am Zugfahrzeug anlenkbar ist. Bei einer derartigen Ausbildung muß lediglich das Seitenrichtgetriebe des Geschützrohres ausgekuppelt werden bzw. ausgeschwenkt werden, so daß sich die Oberlafette relativ zur Unterlafette frei um die Drehachse des Geschützes bewegen kann, wobei diese Drehachse gleichzeitig diejenige Achse darstellt, um welche die Unterlafette und damit die Laufräder durch die Holme verdreht werden, wenn die Holme symmetrisch zu dieser Drehachse an der Unterlafette angelenkt sind.

Die Stellvorrichtung für die Lenkung der die Laufräder tragenden Unterlafette kann gemäß einer weiteren Ausbildung von einem die Holme verbindenden hydraulischen Zylinder-Kolben-Aggregat gebildet sein, welches in allen Betriebsstellungen mit der Längsmittelachse des Gelenkviereckes einen von 90° verschiedenen Winkel einschließt. Die Beaufschlagung des die Holme verbindenden und an den Holmen angelenkten hydraulischen Zylinder-Kolben-Aggregates kann hiebei im Falle einer hydraulischen Lenkung unmittelbar vom Druck in den Lenkzylindern abgeleitet werden oder aber durch entsprechende, mit den einzuschlagenden Rädern des Zugfahrzeuges verbundene Stellzylinder bewirkt werden. Ebenso wie bei der Verwendung einer außermittig am Zugfahrzeug angreifenden Lenkstange kann auch hier durch Beaufschlagung der Hydraulik eine bestimmte Lenkstellung starr eingestellt und damit fixiert werden.

Gemäß einer weiteren Ausbildung kann die Stellvorrichtung als ein die Oberlafette mit der Unterlafette verbindendes hydraulisches Zylinder-Kolben-Aggregat ausgebildet sein, dessen Anlenkstellen in der Draufsicht in Abstand von der Drehachse der Oberlafette relativ zur Unterlafette liegen, wobei das Geschützrohr relativ zu den Holmen mittels der Halterung festgelegt ist. In diesem Falle erfolgt die Verstellung der Unterlafette gegen die als Widerlager des Geschützrohres vorgesehene Halterung desselben und es muß für eine entsprechende stabile Festlegung des Geschützrohres Sorge getragen sein. Auch dieses hydraulische Zylinder-Kolben-Aggregat kann durch Servolenkung des Zugfahrzeuges gesteuert sein. Die Halterung für das Geschützrohr kann in einfacher Weise eine die Holme gelenkig verbindende Stange aufweisen, deren Anlenkstellen an den Holmen vorzugsweise nahe dem protzstangenseitigen Ende der Holme angeordnet sind. Diese Stange kann gegebenenfalls von der die Holme verbindenden Stützstange gebildet sein, welche die Holme zusammen mit der Unterlafette zu dem Gelenkviereck verbindet, wodurch sich eine besonders einfache Konstruktion ergibt. Um eine Beschädigung des Geschützrohres im Gelände zu verhindern, ist das Geschützrohr über die Halterung nachgiebig mit wenigstens einem Holm verbunden, wobei diese nachgiebige Halterung eine Verschiebung des Rohres innerhalb der Halterung in seiner Längsrichtung und eine Verschwenkung relativ zur Halterung zulassen soll.

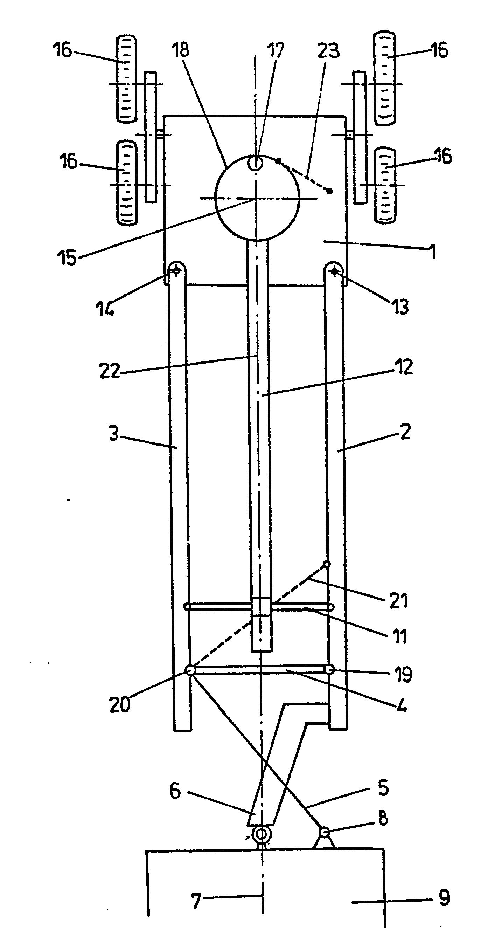

Die Erfindung wird nachfolgend an Hand eines in der Zeichnung dargestellten Ausführungsbeispieles näher erläutert.

In der Zeichnung ist mit 1 die Unterlafette bezeichnet, an welcher zwei Holme 2 und 3 angelenkt sind. Die Holme 2 und 3 sind durch eine Stützstange 4 gelenkig miteinander verbunden. Einer der beiden Holme 3 ist über eine Lenkstange 5 gelenkig und außermittig am Zugfahrzeug angeschlossen. Der obere der beiden Holme 2 ist starr über eine Protzstange 6 an die Anhängerkupplung angeschlossen. Die Anlenkstelle der Lenkstange am Zugfahrzeug ist außerhalb der Längsmittelebene 7 des Zugfahrzeuges vorgesehen und mit 8 bezeichnet. Das Zugfahrzeug selbst ist mit 9 angedeutet. Die Anhängerkupplung befindet sich innerhalb der Längsmittelebene 7 des Zugfahrzeuges.

Zwischen den beiden Holmen 2 und 3 ist eine weitere Verbindungsstange 11 gelenkig angeschlossen, welche die Abstützung der Halterung des Geschützrohres 12 bildet. Die Anlenkstellen 13 des Holmes 2 und 14 des Holmes 3 an der Unterlafette liegen im gleichen radialen Abstand zur Drehachse 15 der Oberlafette. Eine Verschiebung der Holme 2 und 3 in ihrer Längsrichtung relativ zueinander bewirkt somit eine Verdrehung der Unterlafette um die Achse 15 und damit einen Einschlag der an der Unterlafette festgelegten Räder 16. Die Oberlafette ist über ein Seitenrichtgetriebe 17 relativ zur Unterlafette 1 verdrehbar und dieses Seitenrichtgetriebe 17 muß während der Fahrt ausgekuppelt werden, um die freie Beweglichkeit der Unterlafette nicht zu behindern. Die Oberlafette ist hiebei mit 18 schematisch angedeutet.

Durch die Holme 2, 3, die Unterlafette 1 und die bei 19 und 20 gelenkig an die Holme 2 und 3 angeschlossene Stützstange wird ein Lenkerparallelogramm ausgebildet, wobei die Verschiebung der beiden Holme 2 und 3 relativ zueinander durch die Lenkstange 5 bewirkt wird, welche außermittig am Zugfahrzeug 9 angelenkt ist.

Anstelle der Lenkstange 5 kann ein strichliert angedeutetes Zylinder-Kolben-Aggregat 21 an den beiden Holmen 2 und 3 angelenkt sein. Dieses Zylinder-Kolben-Aggregat 21 muß mit der Längsmittelachse 22 des Geschützes einen Winkel einschließen, welcher sicherstellt, daß auch beim größten Einschlag der Räder 16 eine Druckbeaufschlagung des Zylinder-Kolben-Aggregates 21 wiederum eine Rückstellung und damit Geradstellung der Räder bewirken kann. Dieses Zylinder-Kolben-Aggregat 21 muß somit in allen Betriebsstellungen mit der Längsmittelachse 22 einen von 90° verschiedenen Winkel einschließen, um diese -geometrische Bedingung zu erfüllen. Das hydraulische Zylinder-Kolben-Aggregat 21 kann hiebei von der Servolenkung des Zugfahrzeuges oder einem mit der Lenkung des Zugfahrzeuges verhundenen Stellzylinder mit Hydraulikmedium beaufschlagt werden.

Alternativ zur Verwendung der Lenkstange 5 oder des hydraulischen Zylinder-Kolben-Aggregates 21 kann ein hydraulisches Zylinder-Kolben-Aggregat 22 vorgesehen sein, welches die Oberlafette 18 mit der Unterlafette 1 verbindet. Die Anlenkstelle dieses hydraulischen Zylinder-Kolben-Aggregates 22 an der Unterlafette muß ebenso wie die Anlenkstelle dieses hydraulischen Zylinder-Kolben-Aggregates an der Oberlafette in der Draufsicht außerhalb der Drehachse 15 liegen, so daß eine Verkürzung bzw. Verlängerung dieses hydraulischen Zylinder-Kolben-Aggregates eine Verdrehung der Oberlafette 18 relativ zur Unterlafette 1 bewirkt. Wenn nun das Geschützrohr 12 an der Verbindungsstange 11 festgelegt ist, dann bewirkt eine Beaufschlagung des hydraulischen Zylinder-Kolben-Aggregates 22 eine Verdrehung der Unterlafette 1 um die Drehachse 15 und damit ein Einschlagen der Laufräder 16 für die Kurvenfahrt. Auch dieses hydraulische Zylinder-Kolben-Aggregat 22 kann unmittelbar von der Servolenkung des Zugfahrzeuges betätigt werden oder aber über Stellzylinder mit der Lenkung des Zugfahrzeuges verbunden sein. Auch in diesem Fall muß das Seitenrichtgetriebe 17 ausgekuppelt sein, wenn die Lenkung der Laufräder 16 nicht durch dieses Getriebe behindert werden soll. Gegebenenfalls kann auch die Lenkung der Laufräder 16 unter Verwendung des Seitenrichtgetriebes bei festgelegtem Geschützrohr 12 erfolgen.

## Patentansprüche

1. Mittels eines Zugfahrzeuges (9) verfahrbares Geschütz mit einer Oberlafette (18) und einer die Laufräder (16) aufweisenden und als Drehschemel ausgebildeten Unterlafette (1), bei welchem an der Unterlafette (1) wenigstens zwei Holme (2, 3) angelenkt sind, welche durch eine die Holme verbindende Einrichtung zu einem Viereck zusammengeschlossen sind und an wenigstens einem der beiden Holme (2, 3) eine Halterung für das Geschützrohr (12) angeordnet ist, dadurch gekennzeichnet, daß die die Holme verbindende Einrichtung als Stützstange (4) ausgebildet ist und die Holme zu einem Gelenkviereck, insbesondere einem Gelenkparallelogramm, verbindet, daß an einem der beiden Holme (2, 3) eine Protzstange (6) starr befestigt ist, deren freies Ende etwa in der vertikalen Längsmittelebene des Gelenkvierecks liegt und die Anhängekupplung trägt, und daß eine mit dem Zugfahrzeug (9) in Wirkverbindung setzbare Stellvorrichtung für die Lenkung der die Laufräder (16) tragenden Unterlafette (1) vorgesehen ist.

2. Geschütz nach Anspruch 1, dadurch gekennzeichnet, daß die Stellvorrichtung als in der Draufsicht die Protzstange (6) kreuzende Lenkstange (5) ausgebildet ist, deren eines Ende an dem dem die Protzstange (6) tragenden Holm (2) gegenüberliegenden Holm (3) angelenkt ist und deren anderes Ende in einem seitlichen Abstand von der Anhängekupplung des Zugfahrzeuges (9) am Zugfahrzeug anlenkbar ist.

3. Geschütz nach Anspruch 1, dadurch gekennzeichnet, daß die Stellvorrichtung von einem die Holme (2,3) verbindenden hydraulischen Zylinder-Kolben-Aggregat (21) gebildet ist, welches in allen Betriebsstellungen mit der Längsmittelachse des Gelenkviereckes einen von 90° verschiedenen Winkel einschließt.

4. Geschütz nach Anspruch 1, dadurch gekennzeichnet, daß die Stellvorrichtung als ein die Oberlafette (18) mit der Unterlafette (1) verbindendes hydraulisches Zylinder-Kolben-Aggregat (23) ausgebildet ist, dessen Anlenkstellen in der Draufsicht in Abstand von der Drehachse (15) der Oberlafette (18) relativ zur Unterlafette (1) liegen, wobei das Geschützrohr (12) relativ zu den Holmen (2, 3) mittels der Halterung festgelegt ist.

5. Geschütz nach einen der Ansprüche 1 bis 4, dadurch gekennzeichnet, daß die Halterung für das Geschützrohr (12) eine die Holme (2, 3) gelenkig verbindende Stange (11) aufweist, deren Anlenkstellen an den Holmen (2, 3) vorzugsweise nahe dem protzstangenseitigen Ende der Holme angeordnet sind.

6. Geschütz nach einem der Ansprüche 1 bis 5, dadurch gekennzeichnet, daß das Geschützrohr (12) über die Halterung nachgiebig mit wenigstens einem Holm (2, 3) verbunden ist.

## Claims

1. A mobile gun movable by means of a traction vehicle (9) and comprising an upper mount (18) and a lower mount (1) having wheels (16) and forming a swivelling bolster, wherein at least two spars (2, 3) are hingedly connected to the lower mount (1) and are interconnected by means connecting said spars to form a quadrangle and a holding device for the gun barrel (12) being arranged on at least one of the said spars (2, 3), characterised in that the means connecting said spars is designed as a supporting rod (4) and connects the spars to a four-bar linkage, particularly a parallelogram linkage, that a limber rod (6) is rigidly connected to one of said spars (2, 3) and has its free end located approximately in the vertical longitudinal center plane of the four-bar linkage and carries a trailer coupling, and that an actuating mechanism capable of being put in operating connection with the traction vehicle (9) is provided for steering the lower mount (1) having the wheels (16).

2. Gun as claimed in claim 1, characterised in that the actuating mechanism as seen in a top plan view is designed as a strut rod (5) crossing the limber rod (6), one end of said strut rod being hingedly connected to that spar (3) which opposes the spar (2) carrying the limber rod (6) and the other end of said strut rod being hingedly connectable to the traction vehicle at a location lateral from the trailer coupling of the traction vehicle (9).

3. Gun as claimed in claim 1, characterised in that the actuating mechanism is designed as a hydraulic cylinder-piston unit (21) connecting the spars (2, 3) and including an angle differing from 90° with the longitudinal center axis of the four-bar linkage in all operating positions.

4. Gun as claimed in claim 1, characterised in that the actuating mechanism is designed as a hydraulic cylinder-piston unit (23) connecting the upper mount (18) with the lower mount (1) and having its pivot connections as seen in top plan view at a distance from the swivelling axis (15) of the upper mount (18) for rotating same relative to the lower mount (1), the gun barrel (12) being locked in position relative to the spars (2, 3) by means of the holding device.

5. Gun as claimed in any one of claims 1 to 4, characterised in that the holding device for the gun barrel (12) comprises a rod (11) hingedly connecting the spars (2, 3), the pivot connections of said rod at the spars (2, 3) preferably being arranged adjacent those ends of the spars which are located nearest the limber rod.

6. Gun as claimed in any one of claims 1 to 5, characterised in that the gun barrel (12) is yieldingly connected with at least one spar (2, 3) via the holding device.

## Revendications

1.- Canon pouvant être déplacé au moyen d'un véhicule tracteur (9), comprenant un affût supérieur (18) et un affût inférieur (1) qui porte des roues (16) et qui est constitué par un châssis de rotation, sur lequel sont articulés au moins deux longerons (2, 3) qui sont réunis en un quadrilatère par un dispositif de liaison (4), et ou, sur au moins l'un des deux longerons (2, 3) est agencé un dispositif d'attache du tube (12) du canon, caractérisé en ce que le dispositif de liaison des longerons est constitué par une barre d'appui (4) qui relie les longerons pour former avec ces derniers et avec l'affût inférieur, un quadrilatère articulé, en particulier un parallèlogramme déformable, et en ce que sur l'un des deux longerons (2, 3) est fixée rigidement une extrémité d'un timon (6) dont l'autre extrémité se trouve à peu près dans le plan longitudinal médian vertical du quadrilatère articulé et porte l'attelage, un dispositif de commande (5; 21; 23) qui peut étre mis en liaison avec le véhicule tracteur (9) étant prévu pour le braquage de l'affût inférieur (1) qui porte les roues (16).

2.- Canon selon la revendication 1, caractérisé en ce que le dispositif de commande est constitué par une barre de direction (5) qui, en vue de dessus, croise le timon (6), et dont une extrémité est articulée sur le longeron (3) qui est à l'opposé du longeron (2) portant le timon (6) tandis que son autre extrémité peut être articulée sur le véhicule tracteur à une certaine distance latérale de l'attelage du véhicule tracteur (9).

3.- Canon selon la revendication 1, caractérisé en ce que le dispositif de commande est constitué par un groupe hydraulique cylindre-piston (21) qui relie les longerons (2, 3) et qui forme un angle différent de 90° avec l'axe longitudinal médian du quadrilatère articulé dans toutes les positions de travail.

4.- Canon selon la revendication 1, caractérisé en ce que le dispositif de commande est constitué par un groupe hydraulique cylindre-piston (23) qui relie l'affût supérieur (18) à l'affût inférieur (1) et dont les points d'articulation se trouvent, dans une vue de dessus, à une certaine distance de l'axe de rotation (15) sur lequel l'affût supérieur (18) tourne par rapport à l'affût inférieur (1), le tube (12) du canon étant fixé par rapport aux longerons (2, 3) au moyen de l'attache.

5.- Canon selon l'une des revendications 1 à 4, caractérisé en ce que l'attache prévue pour le tube (12) présente une barre (11) qui relie les longerons (2, 3) de façon articulée, dont les points d'articulation sur les longerons (2, 3) sont de préférence disposés à proximité de l'extrémité des longerons côté timon.

6.- Canon selon l'une des revendications 1 à 5, caractérisé en ce que le tube (12) du canon est relié de façon souple à au moins l'un des longerons (2, 3), par l'intermédiaire de l'attache.

0 095 456

1